# EUROPEAN PATENT APPLICATION

(11) **EP 1 577 553 A1**
(43) Date of publication of application: **21.09.2005**
(21) Application number: 05003997.3
(22) Date of filing: 24.02.2005
(51) Int. Cl.: F04B 39/00, F04B 39/04

(54) **Oilless reciprocating air compressor**

(30) Priority: 01.03.2004 JP 2004056632
(71) Applicant: ANEST IWATA CORPORATION, Kanagawa-ken (JP)
(72) Inventor: Inoue, Hiroshi, Kohoku-ku Yokoama-shi Kanagawa (JP)
(74) Representative: Trupiano, Federica

(57) **Abstract**

In an oilless reciprocating air compressor, a piston reciprocates in a cylinder to compress a gas sucked from the outside and the compressed gas is discharged to the outside. The piston has an annular groove on the outer circumference, and a piston ring made of self-lubricating resin composite material is placed in the annular groove. The inner surface of the cylinder has SiC coating to increase the life of the piston ring, thereby allowing the compressor to be used at high pressure and high temperature efficiently to increase durability.

## Description

### BACKGROUND OF THE INVENTION

The present invention relates to an oilless reciprocating air compressor.

In U.S. Patent No.5,117,742, a piston in an oilless reciprocating air compressor is made of resin and has an annular groove on the outer circumference. A piston ring made of resin is fitted in the annular groove, and the piston reciprocates in a cylinder.

In the oilless reciprocating air compressor, it is not necessary for lubricating oil to be fed into a piston ring, a piston or a cylinder. Lubricating oil is not introduced into a compression chamber in the cylinder, and is not contained in compressed air discharged from the compressor. Thus, oilless reciprocating air compressors are widely used in medical, food or oxygen-feeding field that do not like oil in compressed air, or among users who are troubled in feed and maintenance of lubricating oil.

When the resin piston is employed, the cylinder is made from Al or Al alloy flattening, casting or die casting material, and to increase hardness in the inner surface of the cylinder, hard alumite is applied to the inner surface that is in sliding contact with the piston. Anode oxidation coating having the maximum thickness of about thirty microns is formed and grounded to finish the cylinder.

In the oilless reciprocating air compressor, a resin piston is fitted in the cylinder, and reciprocated with a resin piston ring and a resin rider ring. The resin piston ring exhibits desired performance for a long time without replacement. Even if the resin piston ring should fail to be replaced, operation will be able to be continued without fouling because the piston provides self-lubricating capability though air amount discharged from the compressor decreases.

Recently oilless reciprocating air compressors usable under high-pressure range such as 2 to 3 MPa above 1 MPa have been demanded.

However, when a compressor operates under high pressure of 2 to 3 MPa with a cylinder made of Al where hard alumite is applied to the inner surface to increase hardness and is ground on anode oxidization coating, the hard alumite layer on the inner surface of the cylinder decreases heat-releasing effect at high temperature and high pressure to increase temperature of the hard alumite layer and to expand openings of innumerable cellular minute bores generated on the inner surface of the cylinder owing to hard alumite treatment. Thus, the outer surface of the resin piston ring slidably reciprocates on the expanded openings of the bores, so that the outer surface of the resin piston ring is chipped off to make the piston ring worn faster.

Furthermore, small pieces which are peeled off the outer surface of the resin piston ring are put into a gap between the lower surface of the piston ring and the bottom surface of an annular groove as the piston ring goes up in the annular groove. When the piston ring goes down in the annular groove during rising compression stage, a space is created by the inserted small pieces so as to involve leakage between the piston and the cylinder.

### BRIEF DESCRIPTION OF THE DRAWINGS

Fig. 1 is a vertical sectional front view of a known oilless reciprocating air compressor ;

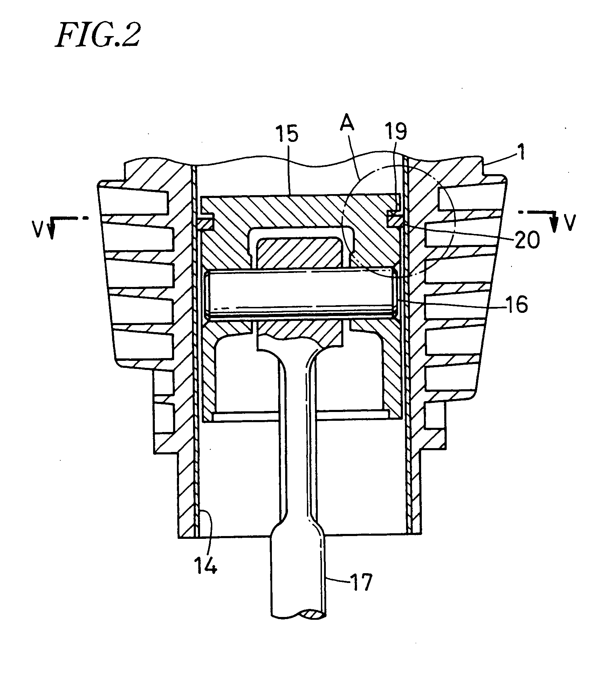

Fig. 2 is a vertical sectional view taken along the line II - II in Fig. 1;
Fig. 3 is an enlarged view of the circle "A" in Fig. 2;
Fig. 4 shows one embodiment of the present invention and is similar to Fig. 3; and
Fig. 5 shows another embodiment of the present invention and is corresponding to an enlarged horizontal sectional view taken along the line V-V in Fig. 2.

### DESCRIPTION OF THE PRIOR ART

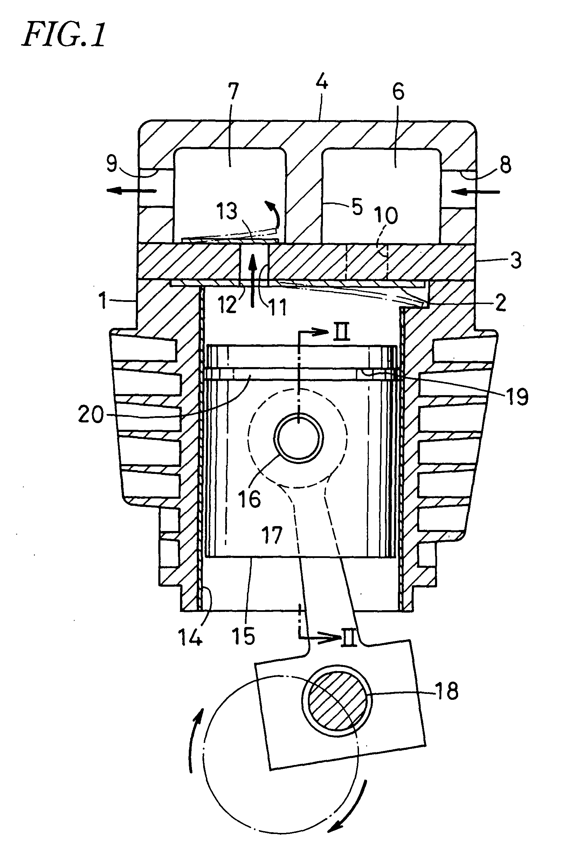

Based on the drawings, a known oilless reciprocating air compressor will be described. As shown in Fig. 1, at the upper end of an Al or Al alloy cylinder 1, a cylinder head 4 is mounted via a sucking valve plate 2 and a spacer 3. The cylinder head 4 is separated into a suction chamber 6 and a discharge chamber 7 by a partition wall 5. An inlet 8 is formed in the side wall of the suction chamber 6 and an outlet 9 is formed in the side wall of the discharging chamber 7.

A sucking bore 10 is formed through the bottom of the suction chamber 6, and discharge bores 11,12 are formed through the spacer 3 and the sucking valve plate 2 to communicate with the discharge chamber 7.

A discharge valve plate 13 is mounted on the spacer 3 at the upper end of the discharge bore 11 and opens to communicate with the discharge chamber 7.

A hard alumite layer 14 is formed on the inner surface of the cylinder 1, and an Al alloy piston 15 is slidably fitted in the cylinder 1. A piston pin 16 which radially extends in the piston 15 is connected to a crankshaft 18 via a connecting rod 17.

An annular groove 19 is formed on the piston 15 and a resin piston ring 20 is fitted in the annular groove 19 to move slightly.

The crankshaft 18 is rotated to allow the piston 15 to reciprocate via the connecting rod 17, so that air sucked through the inlet 8 and the sucking bore 10 is compressed and discharged through the discharge bore 12,11 and the outlet 9.

When the inner surface of the cylinder 1 rises to high temperature and high pressure, temperature of the hard alumite layer 14 on the surface rises. Then, a large number of minute bores of the alumite layer 14 on the inner surface of the cylinder 1 expand. Thus, the outer surface of the piston ring 20 slidably reciprocates on the expanded opening ends of the bores thereby causing the outer surface of the resin piston ring 20 to be shaved off, so that the life of the ring 20 becomes shorter.

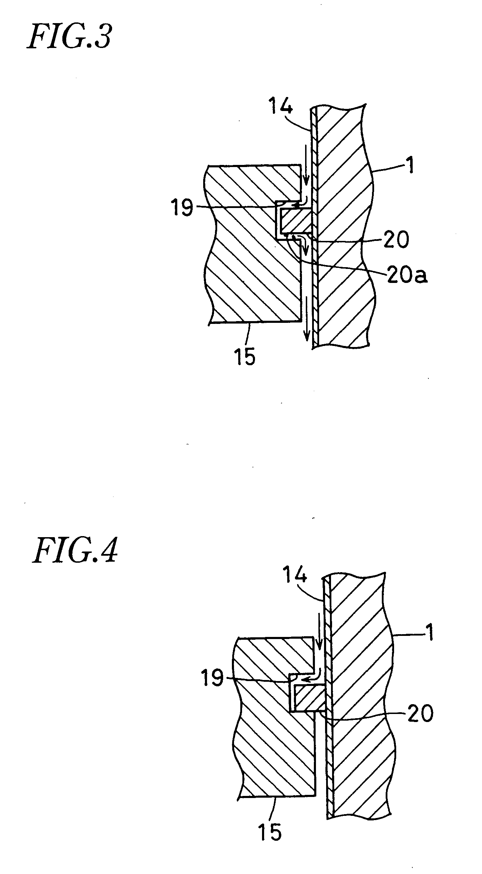

As shown in Fig. 3, a number of small resin pieces 20a peeled off the outer surface of the resin piston ring 20 come into a gap between the resin piston ring 20 and the lower surface of the piston-ring groove 19 to form an air path therebetween. As shown by an arrow in Fig. 3, leakage occurs through the space to decrease compression efficiency and to cause noise.

Accordingly, sealing capability of the resin piston ring 20 becomes poor to decrease discharge performance of the oilless reciprocating air compressor. Furthermore leakage is likely to generate abnormal sound. High temperature air on a compression chamber thermally gives adverse effects to a bearing of the piston, thereby decreasing the lives of the piston pin 16, the end of the connecting rod 17 and the bearing.

In high-pressure and high-temperature operation, the piston ring is abnormally worn to decrease sealing capability and is then worn locally to breakage. To prevent abnormal sound during operation and prevent the life of the bearing from reducing owing to heat by leaked high-temperature compressed air, the piston ring has to be replaced at an earlier stage.

To solve such disadvantages, in Japanese Utility Model Pub. No.35-14811, one or more labyrinth grooves are formed on the upper and lower surfaces of the annular groove, and small pieces of worn piston ring are introduced into the labyrinth grooves to keep piston-ring function for a long time. A gas leaked along the bottom surface of the piston ring is decreased owing to labyrinth action of the annular groove.

However, as operation continues, the piston-ring small pieces in the labyrinth groove increase to come into the piston-ring groove, so that desired purposes cannot be attained after a certain time passes.

To solve such disadvantages, the inventor of the present invention thought that a layer different from Al might be formed to obtain no minute bores in the inner surface of the cylinder. Metal plating such as Ni or Cr is applied to the inner surface of the cylinder, but coating of Ni and Cr decreases sliding performance and seizure resistance. Especially in high-pressure and high-temperature operation, it does not improve the life of the piston ring.

### SUMMARY OF THE INVENTION

In view of the disadvantages, it is an object of the invention to provide an oilless reciprocating air compressor operable at high-pressure and high-temperature of 2 to 3 MPa over 1 MPa to prevent generation of small resin pieces from a piston ring which slidably reciprocates in a cylinder to keep sealing capapility of the piston ring for a long time, to prevent abnormal sounds caused by leakage and to prevent heat from transmitting to a bearing of a piston, further avoiding damages or fauling during reciprocation of the piston ring or piston to greatly extend the life of the piston ring to keep its performance for a long time.

### DETAILED DESCRIPTION OF PEFERRED EMBODIMENTS

An oilless reciprocating air compressor according to the present invention provides structural features as below:

### Cylinder

| | |
|---|---|
| Size | bore 50 mm, 75 mm |
| Material | Al or Al alloy |
| Inner surface | SiC coating formed by plating Hardness of the coating: Vickers Hv 1600 to 2400 Thickness of the coating: 15 µm Average surface roughness: Ra mirror surface finishing of 0.05 to 0.5 µm |

### Piston

Size: external diameter 50 mm, 75 mm, Height: 50 mm, 75 mm
Material: Composite material of COPNA resin and graphite

### Piston ring

Size: nominal diameter 50 mm, 75 mm, width 4.53 mm, thickness 4.0 mm
Material: Composite material of polytetrafluoroethylene resin (Teflon™) and graphite
Features: tension strength 13 to 35 MPa, compression strength 10 to 13 MPa, Vickers hardness: Hv 360 to 400

COPNA resin of which the piston is made is a thermosetting resin prepared by crosslinking a polycyclic aromatic hydrocarbon, such as naphthalene, anthracene, phenanthrene, pyrene or coal tar pitch, by paraxylene glycol in the presence of an acid catalyst. "COPNA" is an abbreviation of "condensed polynuclear aromatic" and is known in U.S. Patent No.5,605,401. Graphite in both the piston and the piston ring has heat resistance and increases sliding performance. Teflon of the piston ring provides self-lubricating property.

The features of a SiC coating as above are grounded as below.

The inner surface of a cylinder 1 made of Al or Al alloy is worked and a SiC coating 21 is formed on the inner surface. The minimum thickness of the coating is advantageous for manufacturing cost.

In an industrially usable oilless reciprocating air compressor, the life of a resin piston ring 20 requires more than ten thousand hours and its thickness thus requires more than 10 µm as initial wear is 2 to 3 µm. Accordingly the thickness is determined to 15 µm. In a small load reciprocating air compressor, the thickness of the coating 21 may be more than 0.5 µm. The SiC coating is 0.5 µm thick at minimum, and 50 to 100 µm thick at maximum.

After plating, the surface is ground to allow average surface roughness Ra to be 0.05 to 0.5 µm.

SiC contained in the SiC coating 21 comprise minute ceramic particles having diameter of less than 1 µm, so that high-hardness dense flat surface layer is formed on the inner surface of the cylinder 1. Therefore, coefficient of friction is decreased to improve sliding performance and wear resistance is greatly increased, thereby increasing the life of the piston ring 20 significantly and facilitating maintenance of an oilless reciprocating air compressor.

SiC in the coating 21 increases heat-releasing effect.

Along the coating 21 containing silicon having high lubricating property on the inner surface of the cylinder 1, the piston ring 20 reciprocates with high lubricating property and reduces sliding resistance. Heat releasing capability of SiC contained in the coating 20 increases the life of the piston ring 20. Furthermore, there is no resin powders 20a separately generated from the piston ring 20 or significantly few compared with the prior art thereby effectively preventing a sliding portion from being damaged.

In Fig. 4, there is no resin small pieces 20a from the piston ring 20 as shown in Fig. 3, and the piston ring 20 always contacts the lower surface to prevent air from going down out of the piston 15.

### Experiments

In three air-cooling oilless reciprocating air compressors having the same size, the same volume and the same dimensions as the above and different surface treatment on a cylinder 1, experiments are carried out at four kinds of hours under the following conditions:
Compressing air pressure: full load operation at 1.4 MPa
Average sliding speed of the piston: 2 to 3 m/sec
Discharge temperature: about 200°C
Time: 2,500 hours, 5,000 hours, 10,000 hours, 20,000 hours

As a result of the experiments, with a cylinder having a SiC coating of high lubricating property and high hardness and a self-lubricating piston ring or a high-lubriating piston, the outer surface of the piston ring and the inner surface of the cylinder are both high lubricating property. The inner surface of the cylinder is flat and provides high hardness. Owing to heat-releasing effect of the SiC coating, the piston ring is initially worn by about 100 µm, but thereafter worn very slowly for a long time.

Decrease in discharged air amount is very little, and neither noise nor damage occurs. Especially a resin piston ring of an oilless reciprocating air compressor operated at high pressure and high temperature can be used without replacement about five times as long as a conventional device having an alumite-treatment cylinder.

Thus, in an oilless reciprocating air compressor having no lubricating oil between an resin piston and a resin piston ring, and a cylinder, SiC coating significantly increases the life of the resin piston ring to overcome the foregoing disadvantages not only at low pressure and low temperature but also at high pressure and high temperature.

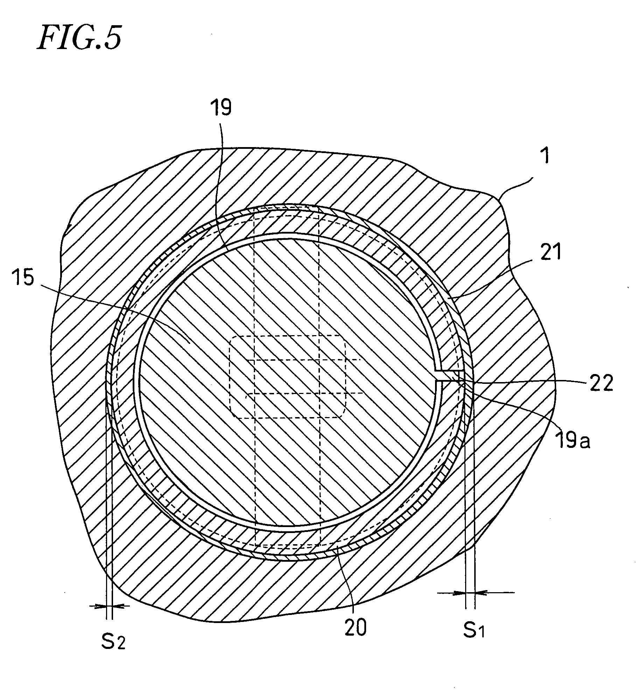

Fig. 5 shows another embodiment of the present invention, The thickness "S1" of a right-side SiC coating 21 at a portion to which higher side thrust acts by a piston 15 during operation is slightly greater than the thickness "S2" at the other side. A receiving projection 19a in an annular groove 19 is positioned at the thicker SiC coating 21. An abutment 22 or a gap between the ends of a piston ring 20 is engaged on the side surfaces of the receiving projection 19a, so that an opening of the abutment 22 is closed by the inner surface of a cylinder.

The foregoing merely relate to embodiments of the invention. Various changes and modifications may be made by a person skilled in the art without departing from the scope of claims wherein:

## Claims

1. An oilless reciprocating air compressor comprising:
a cylinder made of Al or Al alloy;
a piston that reciprocates in the cylinder so that a gas sucked from an outside is compressed and discharged from the cylinder, said piston having an annular groove on an outer circumferential surface; and
a piston ring fitted in the annular groove of the piston and made of composite material of self-lubricating resin and heat-resistant material for increasing sliding performance, an inner surface of the cylinder having SiC coating.

2. An oilless reciprocating air compressor as claimed in claim 1 wherein the self-lubricating material of the piston ring comprises polytetrafluoroethylene and the heat-resistant material comprises graphite.

3. An oilless reciprocating air compressor as claimed in claim 1 wherein the piston is made of self-lubricating composite material.

4. An oilless reciprocating air compressor as claimed in claim 3 wherein the self-lubricating composite material comprises condensed polynuclear aromatic resin and graphite for increasing sliding performance.

5. An oilless reciprocating air compressor as claimed in claim 1 wherein the SiC coating is made by plating.

6. An oilless reciprocating air compressor as claimed in claim 1 wherein thickness of the SiC coating of a portion to which higher side thrust acts by the piston is greater than that at the other side.

7. An oilless reciprocating air compressor as claimed in claim 1 wherein a receiving projection in the annular groove of the piston is provided at a portion to which higher side thrust acts, the projection engaging in an abutment of the piston ring.
